# EUROPEAN PATENT APPLICATION

(11) **EP 2 209 264 A1**
(43) Date of publication of application: **21.07.2010**
(21) Application number: 08861879.8
(22) Date of filing: 12.12.2008
(51) Int. Cl.: H04L 12/54

(54) **DOCUMENT MANAGEMENT METHOD, SYSTEM AND CORRELATED DEVICE**

(30) Priority: 14.12.2007 CN 200710032635
(71) Applicant: Huawei Technologies Co., Ltd., Longgang District, Shenzhen Guangdong 518129 (CN)
(72) Inventor: XIANG, Hai, Longgang District 518129, Shenzhen (CN); YI, Zhiquan, Longgang District 518129, Shenzhen (CN); LU, Jianfeng, Longgang District 518129, Shenzhen (CN); DING, Ning, Longgang District 518129, Shenzhen (CN); LIU, Bin, Longgang District 518129, Shenzhen (CN); LI, Gaofeng, Longgang District 518129, Shenzhen (CN)
(74) Representative: Kreuz, Georg Maria
(86) International application number: PCT/CN2008/073482
(87) International publication number: WO 2009/076910

(57) **Abstract**

An Extensible Markup Language (XML) document management request method is provided. A client sends an indication for performing a batch processing operation on a plurality of documents or a plurality of nodes in a single document to a server through a document management request, and the server acquires corresponding document management batch processing information after determining that the document management request is a request of processing for batch document management and then performs a corresponding document management batch processing operation. A corresponding XML document management method, an XML document management client (XDMC), an XML document management server (XDMS), and an XML document management system are further provided. As the client can trigger a batch processing operation on a plurality of documents or a plurality of nodes in a single document by sending only one signaling message, the operating delay is reduced, thereby improving the operational efficiency and the reliability of data operations.

## Description

The application claims the benefit of priority to Chinese Patent Application No. 200710032635.X, filed on December 14, 2007, and entitled "DOCUMENT MANAGEMENT METHOD, SYSTEM AND DEVICE", which is incorporated herein by reference in its entirety.

### FIELD OF THE TECHNOLOGY

The present invention relates to the field of information management technology, and more particularly to an Extensible Markup Language (XML) document management request method, a corresponding XML document management method, an XML document management system, an XML document management client (XDMC), and an XML document management server (XDMS).

### BACKGROUND OF THE INVENTION

Extensible Markup Language (XML) is a set of rules for defining semantic markups that break a document into parts and identify the different parts of the document. A document that conforms to the XML rules is called an XML document. The XML document is easy to read and edit, and is an ideal format for describing and exchanging data over a network.

An XML document management client (XDMC) may perform query, addition, modification, deletion and other operations on application configuration data stored in an XML document management server (XDMS) in the XML format, by using document management requests such as "GET", "PUT", and "DELETE" and methods defined in an XML Configuration Access Protocol (XCAP) in Open MOBIE Alliance (OMA) standards

In practical applications, a user may perform corresponding query, addition, modification, deletion and other operations on a single document or a node in the single document of the XDMS through the above three requests. If the user needs to perform query, addition, modification, deletion and other operations on a plurality of documents or a plurality of nodes in a single document of the XDMS, corresponding request operations needs to be invoked many times between the XDMC and the XDMS in order to complete the operations on the documents or the nodes in the single document.

### SUMMARY OF THE INVENTION

The present invention provides an XML document management request method, which includes: receiving a request indication of processing for batch document management of a user; generating a request of processing for batch document management according to the request indication of processing for batch document management; and sending the request of processing for batch document management to a server.

The present invention also provides a corresponding XML document management method, which includes: receiving a document management request; determining whether the received document management request is a request of processing for batch document management or not; acquiring corresponding document management batch processing information from the request of processing for batch document management if the received document management request is a request of processing for batch document management; and performing a corresponding document management batch processing operation according to the document management batch processing information.

The present invention further provides an XDMC, which includes: a user operation unit, adapted to receive a request indication of processing for batch document management of a user; a request generation unit, adapted to generate a request of processing for batch document management according to the request indication of processing for batch document management; and a request sending unit, adapted to send the request of processing for batch document management to a server.

The present invention further provides an XDMS, which includes: a request receiving unit, adapted to receive a document management request; a request resolution unit, adapted to determine whether the document management request is a request of processing for batch document management or not, and acquire corresponding document management batch processing information from the request of processing for batch document management if the document management request is a request of processing for batch document management; and a request processing unit, adapted to perform a corresponding document management batch processing operation according to the document management batch processing information.

The present invention further provides an XML document management system, which includes a client (i.e. a client computer, a client server, or a client terminal, a client device, etc.) and a server. The client includes: a user operation unit, adapted to receive a request indication of processing for batch document management of a user; a request generation unit, adapted to generate a request of processing for batch document management according to the request indication of processing for batch document management; and a request sending unit, adapted to send the request of processing for batch document management to the server. The server includes: a request receiving unit, adapted to receive a document management request; a request resolution unit, adapted to determine whether the document management request is a request of processing for batch document management or not, and acquire corresponding document management batch processing information from the request of processing for batch document management if the document management request is a request of processing for batch document management; and a request processing unit, adapted to perform a corresponding document management batch processing operation according to the document management batch processing information.

In the above technical solutions, the client sends an indication for performing a batch processing operation on a plurality of documents or a plurality of nodes in a single document to the server through a document management request, and the server acquires corresponding document management batch processing information after determining that the document management request is a request of processing for batch document management and then performs the corresponding document management batch processing operation. As the client can trigger a batch processing operation on a plurality of documents or a plurality of nodes in a single document by sending only one signaling message, the operating delay is reduced, and thus the operational efficiency and the reliability of data operations are improved.

### BRIEF DESCRIPTION OF THE DRAWINGS

To illustrate the technical solutions of the present invention or the prior art more clearly, the accompanying drawings for describing the embodiments or the prior art are introduced briefly in the following. Apparently, the accompanying drawings in the following description are merely some exemplary embodiments of the present invention; those of ordinary skill in the art can obtain other drawings according to the accompanying drawings without paying any creative efforts.
FIG. 1 is a schematic flow chart of an XML document management request method according to an embodiment of the present invention;
FIG. 2 is a schematic flow chart of an XML document management method according to an embodiment of the present invention;
FIG. 3 is a schematic flow chart of an XML document management batch PUTS method according to an embodiment of the present invention;
FIG. 4 is a schematic flow chart of an XML document management batch GETS method according to an embodiment of the present invention;
FIG. 5 is a schematic flow chart of an XML document management batch DELETES method according to an embodiment of the present invention;
FIG. 6 is a schematic flow chart of an XML document management batch MOVE method according to an embodiment of the present invention;
FIG. 7 is a schematic view showing the constitution of an XML document management system according to an embodiment of the present invention;
FIG. 8 is a schematic structural view of an XDMC according to an embodiment of the present invention; and
FIG. 9 is a schematic structural view of an XDMS according to an embodiment of the present invention.

### DETAILED DESCRIPTION OF THE EMBODIMENTS

The technical solutions of the present invention will be clearly described below with reference to some accompanying drawings. It is obvious that the embodiments to be described are only a part rather than all of the embodiments of the present invention. All other embodiments derived by those skilled in the art based on the embodiments of the present invention without carrying out creative activities should fall within the scope of the present invention.

An embodiment of the present invention provides a document management request method. In this method, a client sends a document management request for processing a plurality of documents or a plurality of nodes in a single document to a server, and the server performs a corresponding document management batch processing operation after determining that the document management request is a request of processing for batch document management. Another embodiment of the present invention further provides a corresponding XML document management method, an XML document management system, an XDMC, and an XDMS. Detailed descriptions are given below.

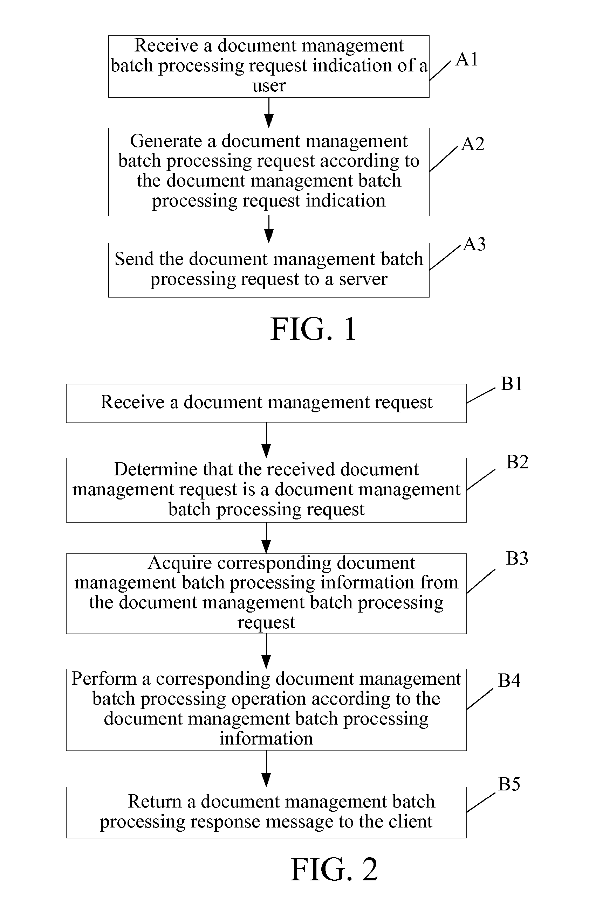

FIG. 1 is a schematic flow chart of an XML document management request method according to an embodiment of the present invention. Referring to FIG. 1, the method includes the following steps.

In step A1, a request indication of processing for batch document management of a user is received.

Here, the request indication of processing for batch document management is one of a request indication of PUTS for batch document management, a request indication of GETS for batch document management, a request indication of DELETES for batch document management, and a request indication of MOVE for batch document management. Corresponding to the PUT method defined in the existing XCAP, the request indication of PUTS for batch document management indicates that the user needs to perform a PUTS operation on a plurality of documents or a plurality of nodes in a single document at the same time, and an XDMC may acquire the PUTS request indication of the user through an operating interface provided to the user. Corresponding to the GET method defined in the existing XCAP, the request indication of GETS for batch document management indicates that the user needs to perform a GETS operation on a plurality of documents or a plurality of nodes in a single document at the same time, and an XDMC may acquire the GETS request indication of the user through an operating interface provided to the user. Corresponding to the DELETE method defined in the existing XCAP, the request indication of DELETES for batch document management indicates that the user needs to perform a DELETES operation on a plurality of documents or a plurality of nodes in a single document at the same time, and an XDMC may acquire the DELETES request indication of the user through an operating interface provided to the user. In the existing XML document management method, a MOVE operation on a node is achieved through PUT and DELETE signaling messages; while the request indication of MOVE for batch document management described in the present invention indicates that the user needs to perform a MOVE operation on a plurality of documents or a plurality of nodes in a single document at the same time, and an XDMC may acquire the MOVE request indication of the user through an operating interface provided to the user.

In step A2, a request of processing for batch document management is generated according to the request indication of processing for batch document management.

Here, in specific implementations, considering the structural compatibility between the "PUT", "GET" and "DELETE" signaling methods defined in the existing XCAP, as well as the practice of defining protocol standards, the request of processing for batch document management described in the present invention is mainly constituted by the following parts.

### 1. Request Line

The Request Line includes: Method (method name), Request-URI, and HTTP-Version (HTTP protocol version number).
1) The description of Method (method name) is similar to that in the prior art. In this embodiment of the present invention, a method name of a document management batch PUTS request is defined as PUTS, a method name of a document management batch GETS
   request is defined as GETS, a method name of a document management batch DELETES request is defined as DELETES, and a method name of a document management batch MOVE request is defined as MOVE. Obviously, the definitions of the method names are mainly used to distinguish from the existing methods while ensuring a certain readability. Therefore, it should be understood by those skilled in the art that the use of other characters may also achieve the same objective.
2) In the prior art, a standard XCAP signaling Request-URI format is: XCAP Root + AUID + "users" + XUI + filename. For example, for http://xcap.example.com/org.openmobilealliance.user-profile/users/sip:zhangshan@huawei. com/index.xml, XCAP Root is http://xcap.example.com/, AUID is org.openmobilealliance.user-profile, "users" is a constant indicating that the following is user information (that is, XUI), XUI is sip:user@huawei.com (sip: indicates that XUI is a tel uri, and huawei.com is an XDMS home domain name), and filename is index.xml.

In order to support batch processing, the implementation can be achieved by using a batch processing tag "batch" to replace the filename (other character strings may also be used as the tag). If a plurality of services needs to be operated at the same time, AUID in Request-URI is replaced with a certain character string not indicating any specific service, for example, "00", and the specific services to be operated are placed in the subsequent message body starting with "xs:schema". If only one service is operated at present, a true service ID may be stored in Request-URI.

Based on the above mechanism, Request-URI of the XCAP batch processing request line may be expressed as:
http://xcap.example.com/00/users/sip:zhangshan@huawei.com/batch.

### 2. Request Message Header

| Name | Type | Description |
|---|---|---|
| Content-Type | media-type | Specify a MIME type of the message body. |
| Content-Length | 1*DIGIT | Length of the message body, |
| | | See [RFC2616]section 14.13. |

Each XCAP batch processing request has a different message body format, and thus has a different Content-Type. In the embodiment, Content-Type definitions of several batch processing requests are agreed as follows:
GETS: application/gets+xml (corresponding to document management batch GETS);
PUTS: application/puts+xml (corresponding to document management batch PUTS);
DELETES: application/deletes+xml (corresponding to document management batch DELETES);
MOVE: application/move+xml (corresponding to document management batch MOVE);
The Content-Type may also be defined as other values, but needs to be distinguished from those defined by the OMA.

### 3. Request Message Body

Each batch processing request signaling message has a different request message body format, and corresponding description will be given below.

NameSpace and targetNamespace of a batch processing request message are described at an initial portion of a message body thereof. For example: for <xs:schema xmlns:xs="http://www.w3.org/2001/XMLSchema" xmlns="com:huawei:puts" targetNamespace="com:huawei:puts" elementFormDefault="qualified">, NameSpace of a PUTS request message body is "com:huawei:puts".

In step A3, the request of processing for batch document management is sent to a server.

Here, the XDMC may send the request of processing for batch document management to the XDMS by a method for sending document management requests of other existing types.

Generally, the XDMC will receive a processing result response message from the XDMS for the request of processing for batch document management. In the following description, it will be illustrated that the processing result response message from the XDMS for the request of processing for batch document management may vary with document management batch processing message formats of request of processing for batch document managements of different types. Processes of receiving and processing document management batch processing messages by the XDMC will be described below corresponding to document management batch processing operations of specific types.

FIG. 2 is a schematic flow chart of an XML document management method according to an embodiment of the present invention. Referring to FIG. 2, the method includes the following steps.

In step B1, a document management request is received from a client.

This step may be implemented by an existing method for receiving a document management request.

In step B2, it is determined that the received document management request is a request of processing for batch document management.

Here, the XDMS may determine a type of the received document management request by resolving the document management request according to an agreement with the XDMC. For example, a request of processing for batch document management is identified with a newly defined method name, and request of processing for batch document managements of various types are identified with corresponding method names.

In step B3, corresponding document management batch processing information is acquired from the request of processing for batch document management.

Here, after determining that the received document management request is a request of processing for batch document management, the XDMS resolves a message header of the document management request first, and then decodes a message body of the request of processing for batch document management, by identifying a Content-Type (a request of processing for batch document management of one type is corresponding to a unique Content-Type ID) and according to a message body format agreed between the XDMS and the XDMC corresponding to the Content-Type, so as to acquire the corresponding document management batch processing information.

In the embodiment of the present invention, request of processing for batch document managements of different types have different message body formats. Corresponding to a request of processing for batch document management of a specific type, the XDMC generates the corresponding request of processing for batch document management based on a message body format agreed with the XDMS, and at the same time, the XDMC identifies a message body format type with a Content-Type ID in the header. The XDMS receives the request of processing for batch document management, resolves the Content-Type ID in the message header thereof to acquire the message body format, and then decodes the message body of the request of processing for batch document management according to a message body format corresponding to the message body format type.

In step B4, a corresponding document management batch processing operation is performed according to the document management batch processing information.

In step B5, a document management batch processing response message is returned to the client.

Here, a document management batch processing response message is generated based on execution result information of the document management batch processing operation and according to a corresponding response message format for the document management batch processing operation, and the document management batch processing response message is sent to the XDMC.

The document management batch processing response message described in the embodiment of the present invention is mainly constituted by the following parts.

### 1. Response Status Line

| Name | Type | Description | |
|---|---|---|---|
| HTTP-Version | | HTTP version, value: HTTP/1.1. | |
| Status-Code | 3DIGIT | Return a status code: return 200 if the batch processing request is successfully performed, otherwise, return 500. | |
| Reason-Phrase | *<TEXT, excluding CR, LF> | A brief description of the status code. | |
| | | Return OK for success | |
| | | Return NOK for failure | |

### 2. Response Message Header

| Name | Type | Description | Remark |
|---|---|---|---|
| Etag | entity-tag | For comparing different entities from the same resource | See [RFC2616]section 14.19, |
| | | | 14.24, 14.26, 14.44 |
| | | | [XCAP]section 7.10,8.5 |
| Content-Type | media-type | Specify a MIME type of the message body | |
| Content-Length | 1*DIGIT | Length of the message body | See [RFC2616]section 14.13 |

Content-Type of response message bodies of four batch processing signaling messages described in the present invention are defined as follows:
GETS: application/gets-result+xml
PUTS: application/puts-result+xml
DELETES: NA
MOVE: NA
   The MIME type may also be specified by other tags.
   Content-Length is described by "(...)".

### 3. Response Message Body

Corresponding content is returned according to the request, and a response message body format of each batch processing signaling message will be described correspondingly below.

In the above method embodiments, the client sends an indication for performing a batch processing operation on a plurality of documents or a plurality of nodes in a single document to the server through a document management request, and the server acquires corresponding document management batch processing information after determining that the document management request is a request of processing for batch document management and then performs a corresponding document management batch processing operation. As the client can trigger a batch processing operation on a plurality of documents or a plurality of nodes in a single document by sending only one signaling message, the operating delay is reduced, thereby improving the operational efficiency and the reliability of data operations.

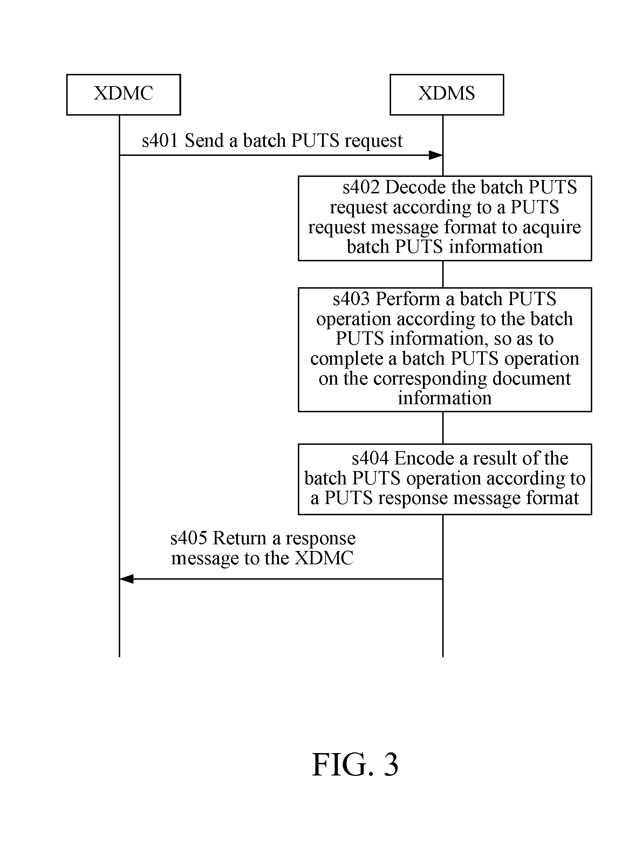

FIG. 3 is a schematic flow chart of an XML document management batch PUTS method according to an embodiment of the present invention, which is described in detail below.

In step s401, an XDMC sends a document management batch PUTS request to an XDMS.

A signaling format of the document management batch PUTS request is as follows:
1. Request Line

| Name | Type | Description |
|---|---|---|
| Method | token | XCAP request method, value: PUTS |
| Request-URI | HTTP URI | Specify an XCAP resource for the request operation. |
| HTTP-Version | | HTTP version, value: HTTP/1.1 |

The PUTS signaling request line is as follows:
PUTS http://xcap.example.com/00/users/sip:XXX@huawei.com/batch HTTP/1.1.

Here, "batch" indicates a batch PUTS operation performed on documents; "00" is a replacement character for auid, indicating a specific service to be processed defined in the message; XXX indicates a user number that initiates the request; "sip:" indicates a sip uri; and "@huawei.com" is an XDMS home domain name of the user XXX.

### 2. Request Message Header

The PUTS signaling request message header is as follows:
Content-Type: application/puts+xml;
Content-Length: (...)
   application/puts+xml is a PUTS request message body format. The Content-Type may also be other tags, but must be distinguished from those defined by the OMA.

### 3. Request Message Body

PUTS request message body format:

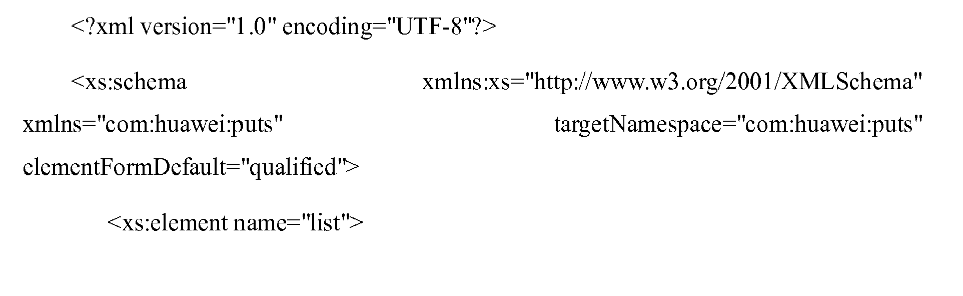

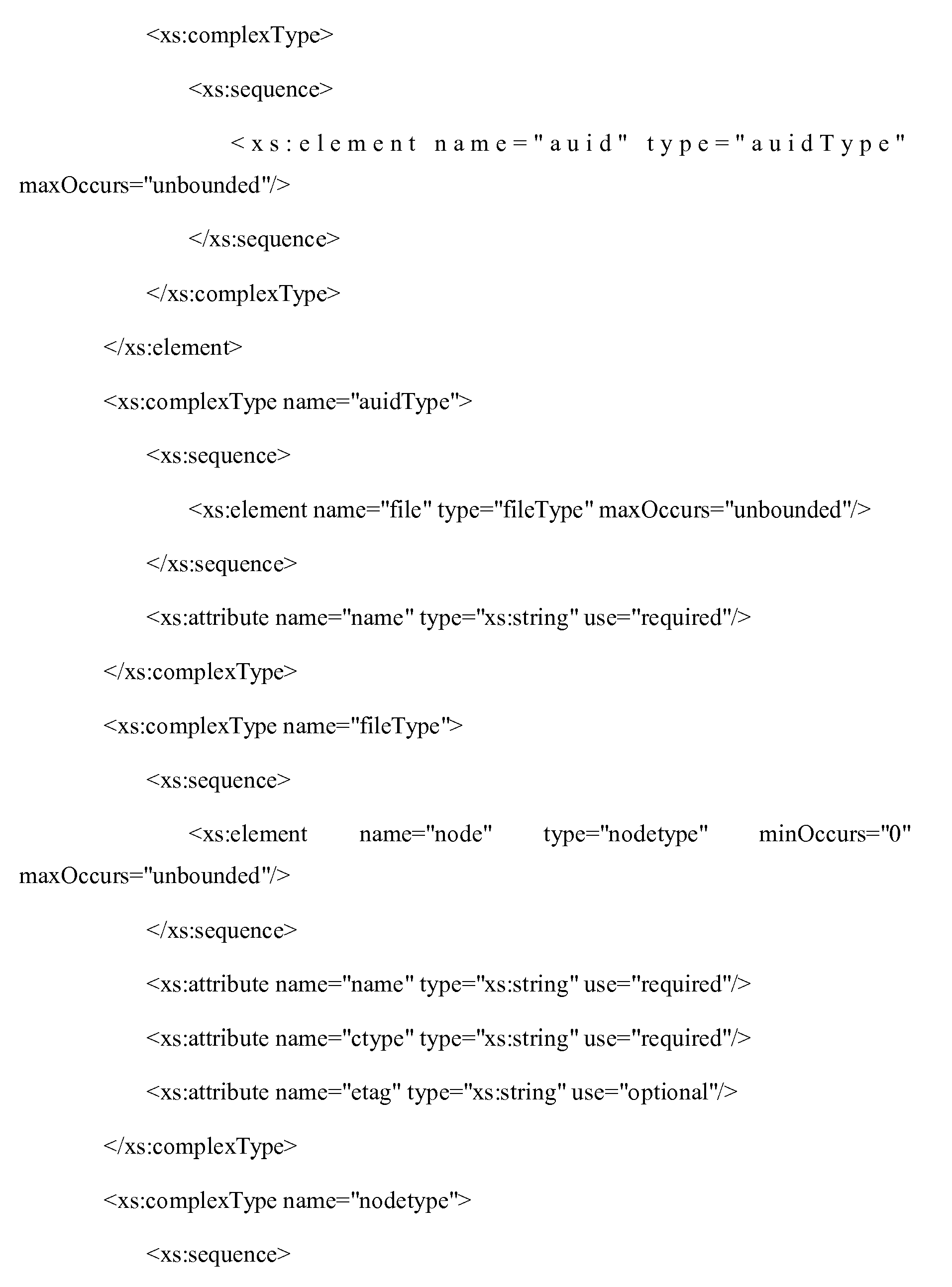

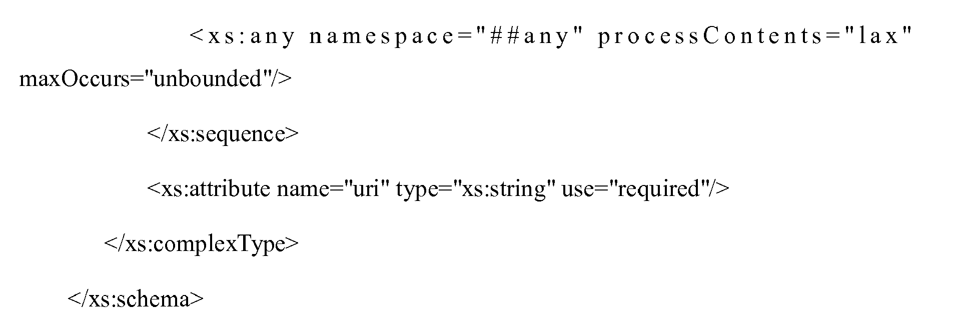

### Description:

The PUTS request message body is defined based on the batch processing characteristics of the PUTS request message.

"com:huawei:puts" is namespace of the PUTS request message body, which may also be other agreed values.

The PUTS request message body is divided into four levels: list, auid, file, and node, which may also be other agreed attribute names. Here, list is a root node, "auid" indicates a service to be processed, "file" indicates a document to be processed, and "node" indicates a node to be processed.

According to the schema definition, a PUTS operation may be respectively performed on a plurality of documents of a plurality of services (represented by AUID), and may also be performed on a plurality of nodes in the same document.
PUTS operation information of the same request may also be expressed in a "list" tag. auidType: name is a name of auid.
fileType: name is a name of a document, ctype is cType of the document, and etag is a version number of the document. A particular agreement is reached regarding the ctype attribute in file: ctype="application/xcap-el+xml" indicates modifying a node element, ctype="application/xcap-att +xml" indicates modifying a node attribute, and other values may also be agreed.
nodetype: the uri attribute indicates a path of a node to be inserted or replaced in the xml document, and the uri value uses the Xpath syntax.

An example of the batch PUTS request message is as follows: PUTS request message
PUTS http://xcap.example.com/00/users/sip:13500012345@huawei.com/batch HTTP/1.1

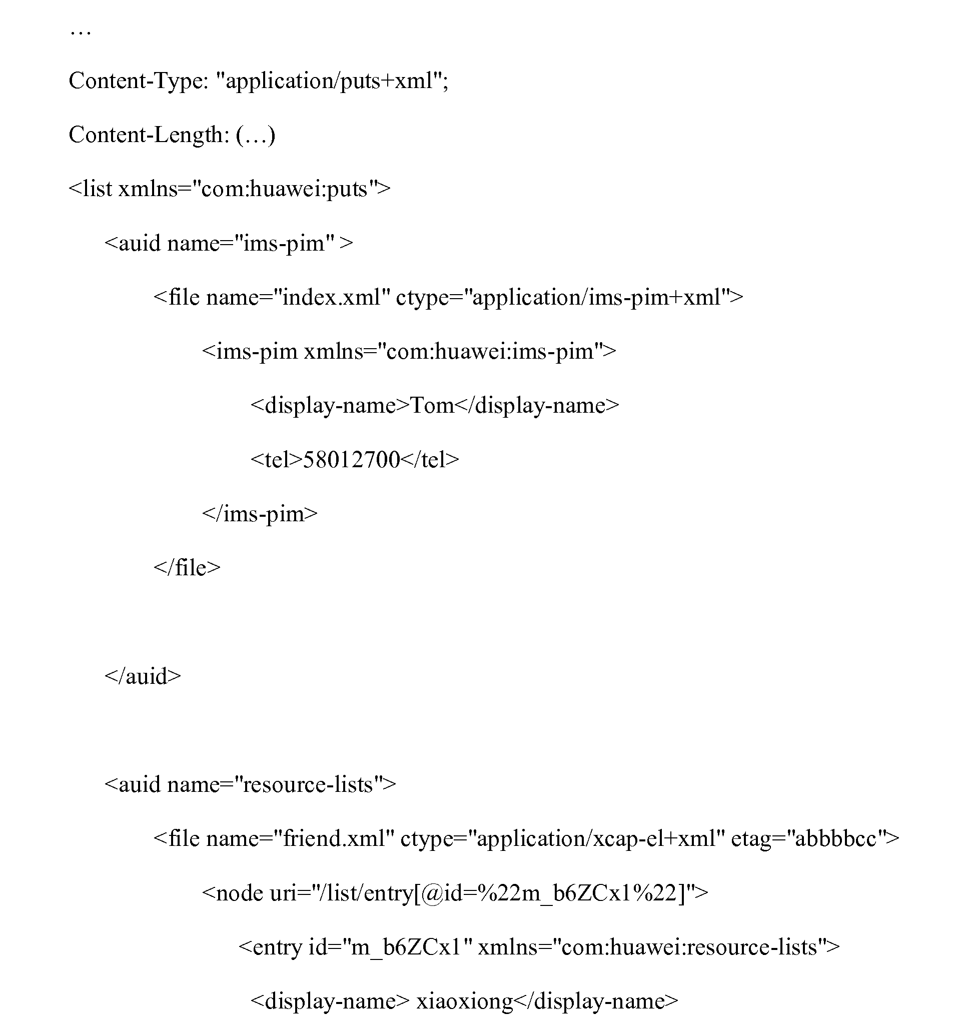

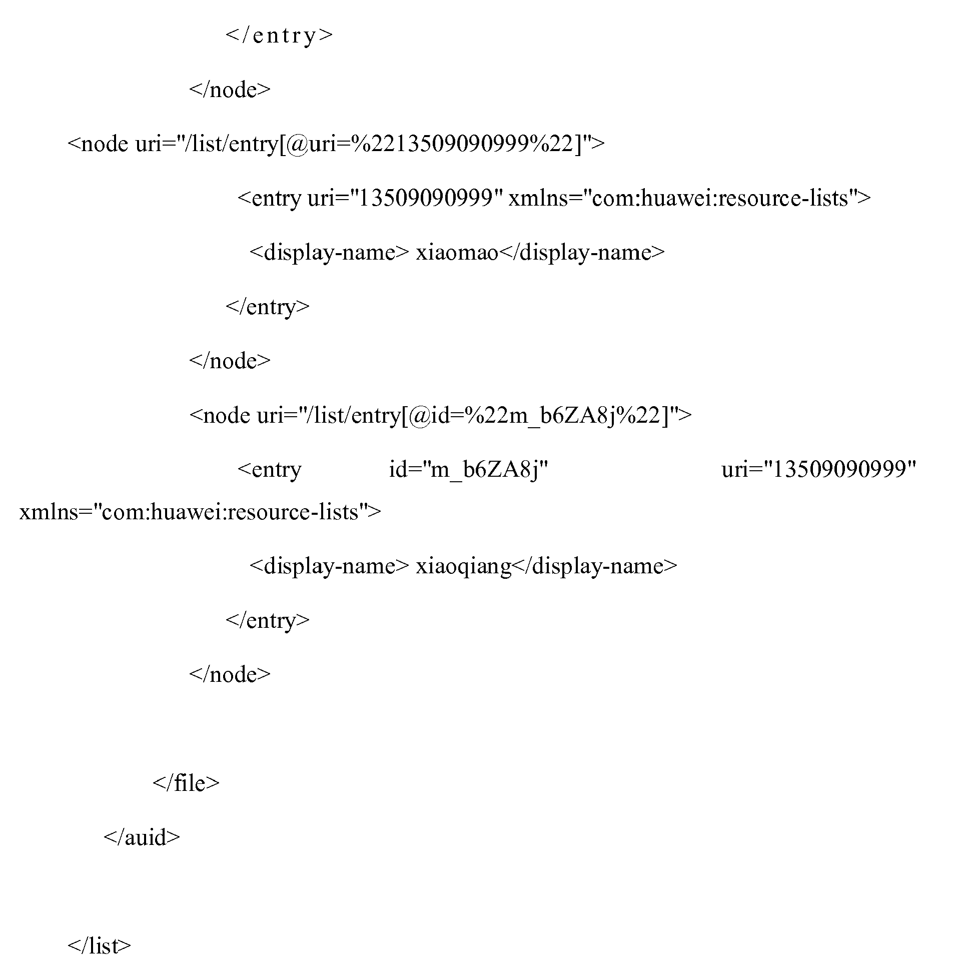

### Description:

This example indicates that a user 13500012345 requests concurrently modifying a document index.xml of ims-pim (auid of personal information) and modifying a document friend.xml of resource-lists (auid of a group list).

ctype of ims-pim is "application/ims-pim+xml", which is different from "application/puts+xml" of the message body.

namespace of ims-pim is "com:huawei:ims-pim", which is also different from "com:huawei:puts" of the message body.

For modifying the index.xml, the default is Authorized, as no version number etag is specified.
ctype of friend.xml is "application/xcap-el+xml", indicating modifying a node.
etag of friend.xml is "abbbbcc", indicating that the XDMS is required to adopt version control such that it is not allowed to modify the node if the version number is different.
The node path is described in the uri attribute in the "node" tag.

Each pair of entry under the node describes entry nodes in resource-lists.

In step s402, the batch PUTS request is decoded according to a PUTS request message format to acquire batch PUTS information.

The XDMS resolves the message header of the batch PUTS request to obtain that Content-Type is application/puts+xml, and then decodes the message body of the batch PUTS request according to the corresponding PUTS message body format to acquire the batch PUTS information.

In step s403, a batch PUTS operation is performed according to the batch PUTS information, so as to complete a batch PUTS operation on the corresponding document information.

In step s404, a result of the batch PUTS operation is encoded according to a PUTS response message format.

The composition of a PUTS response message is as follows:
1. Response Status Line
   Format: HTTP-Version + Status-Code + Reason-Phrase
   HTTP version, HTTP-Version: HTTP/1.1
   Status Code, Status-Code: 200 or 500
   Reason-Phrase: OK if Status-Code is 200, NOK if Status-Code is 500.
2. Response Message Header
   Content-Type: application/puts-result+xml
   Content-Length: (...)
   application/puts-result+xml is a PUTS response message body format. The Content-Type may also be other tags, but must be distinguished from those defined by the OMA.
3. Response Message Body

The PUTS response message body format is as follows:

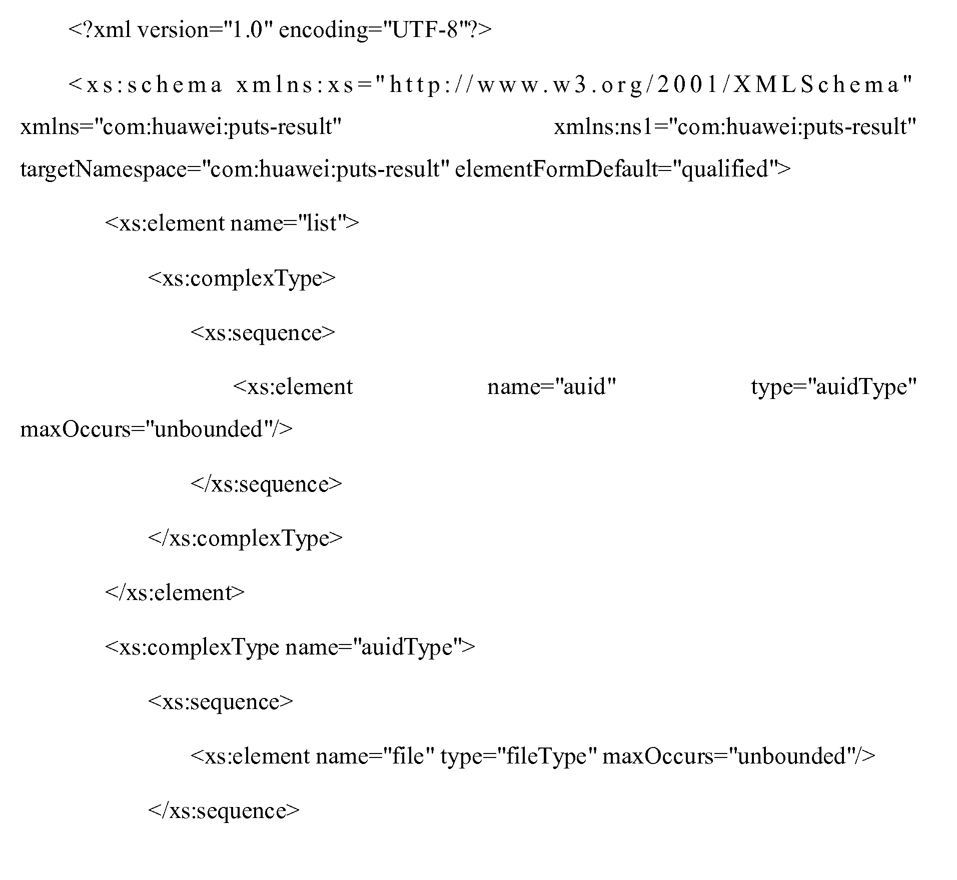

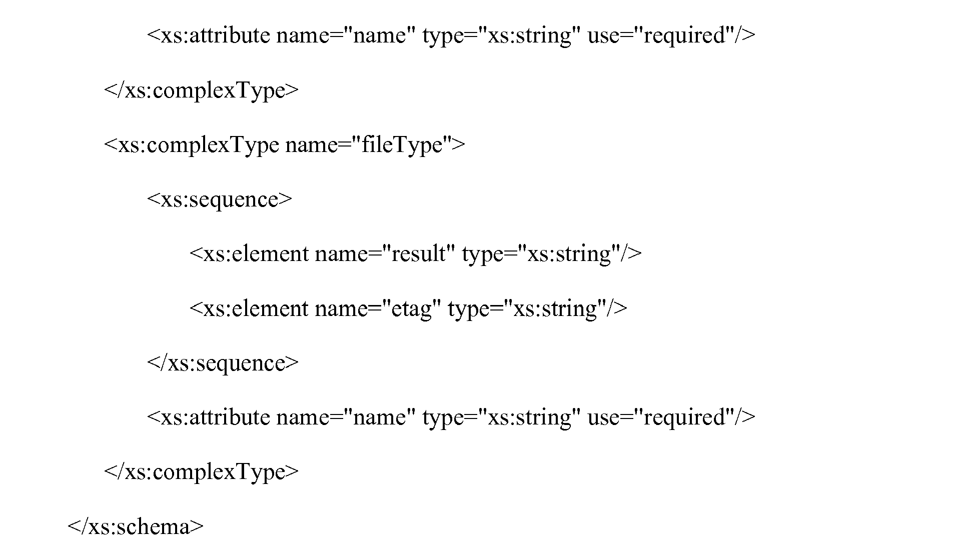

### Description:

The PUTS response message body is defined based on the batch processing characteristics of the PUTS response message, and supplements the OMA XCAP.

"com:huawei:puts-result" is NameSpace of the PUTS response message, which may also be other agreed values.

The PUTS response message body includes three levels: list, auid, and file. Here, list is a root node, auid describes service information, and file describes document information. Other agreed element names may also be used.
auid node: name is a name of auid, and ctype is schema corresponding to auid.
file node: name is a name of a document, result is a return code of each document operation (see the definition of return code in OMA XCAP PUT signaling), and etag is a new version number of the document.

If a document or node is successfully created, result takes a value of 201. If a document or node is successfully modified, result takes a value of 200.

An example of the batch PUTS response message is as follows:

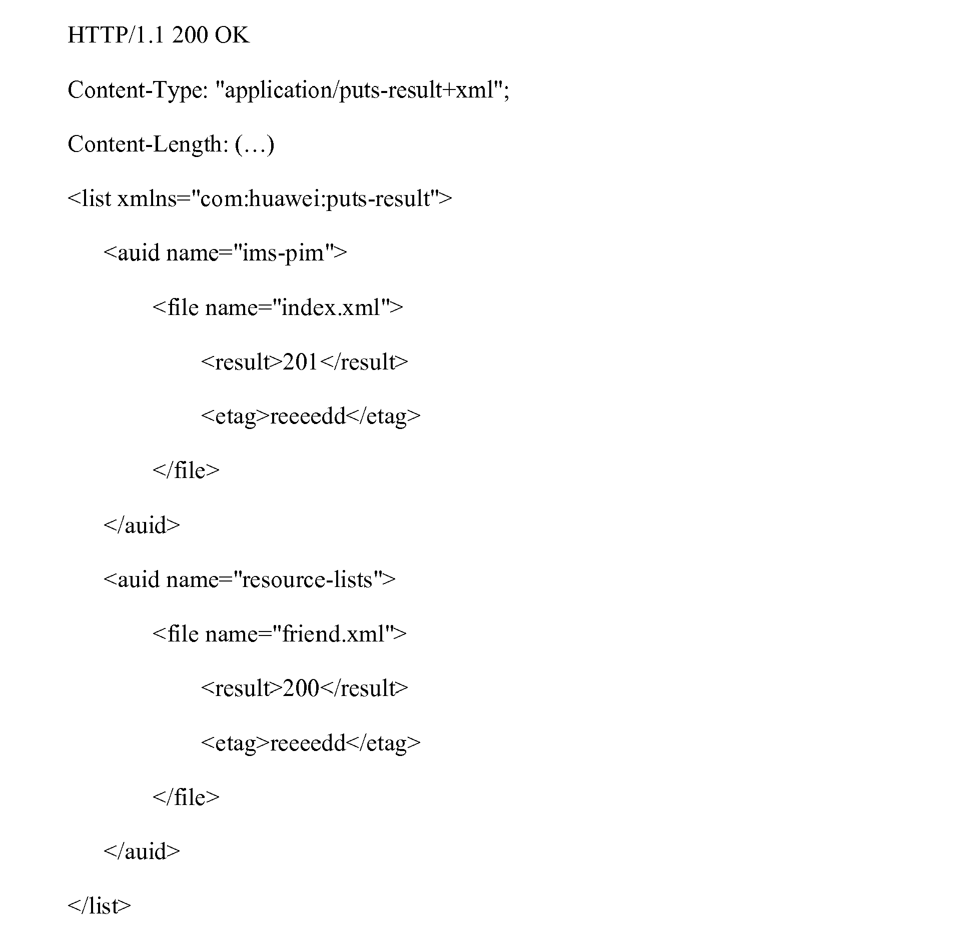

It can be seen from the above example that, the return code (result) for creation is different from that for modification, which conforms to the OMA definition.

In step s405, a response message is returned to the XDMC.

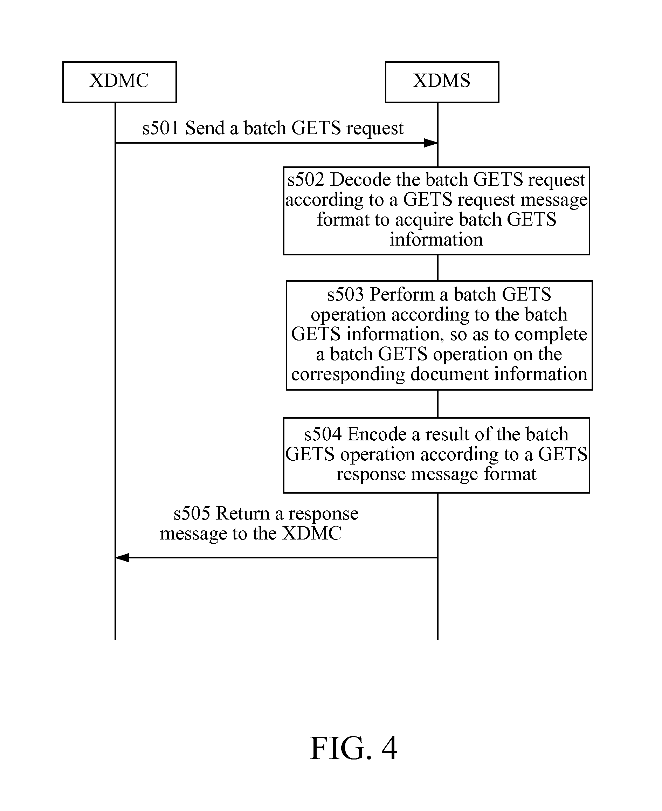

FIG. 4 is a schematic flow chart of an XML document management batch GETS method according to an embodiment of the present invention, which is described in detail below.

In step s501, a batch GETS request is sent.

A signaling format of the document management batch GETS request is as follows:

### 1. Request Line

| Name | Type | Description |
|---|---|---|
| Method | token | XCAP request method, value: GETS |
| Request-URI | HTTP URI | Specify an XCAP resource for the request operation. |
| HTTP-Version | | HTTP version, Value: HTTP/1.1 |

The GETS signaling request line is as follows:
GETS http://xcap.example.com/00/users/sip:XXX@huawei.com/batch HTTP/1.1.

Here, "batch" indicates a batch GETS operation performed on documents; "00" is a replacement character for auid, indicating a specific service to be processed defined in the message; "XXX" indicates a user number that initiates the request; "sip:" indicates a sip uri; and "@huawei.com" is an XDMS home domain name of the user XXX.

### 2. Request Message Header

The GETS signaling request message header is as follows:
Content-type: application/gets+xml
Content-Length:(...)
   application/gets+xml is a GETS request message body format. The Content-Type may also be other tags, but must be distinguished from those defined by the OMA.

### 3. Request Message Body

GETS request message body format:

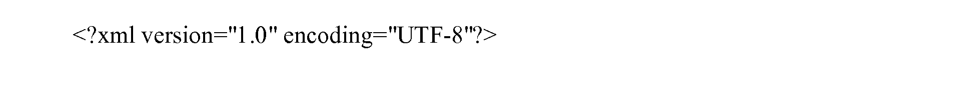

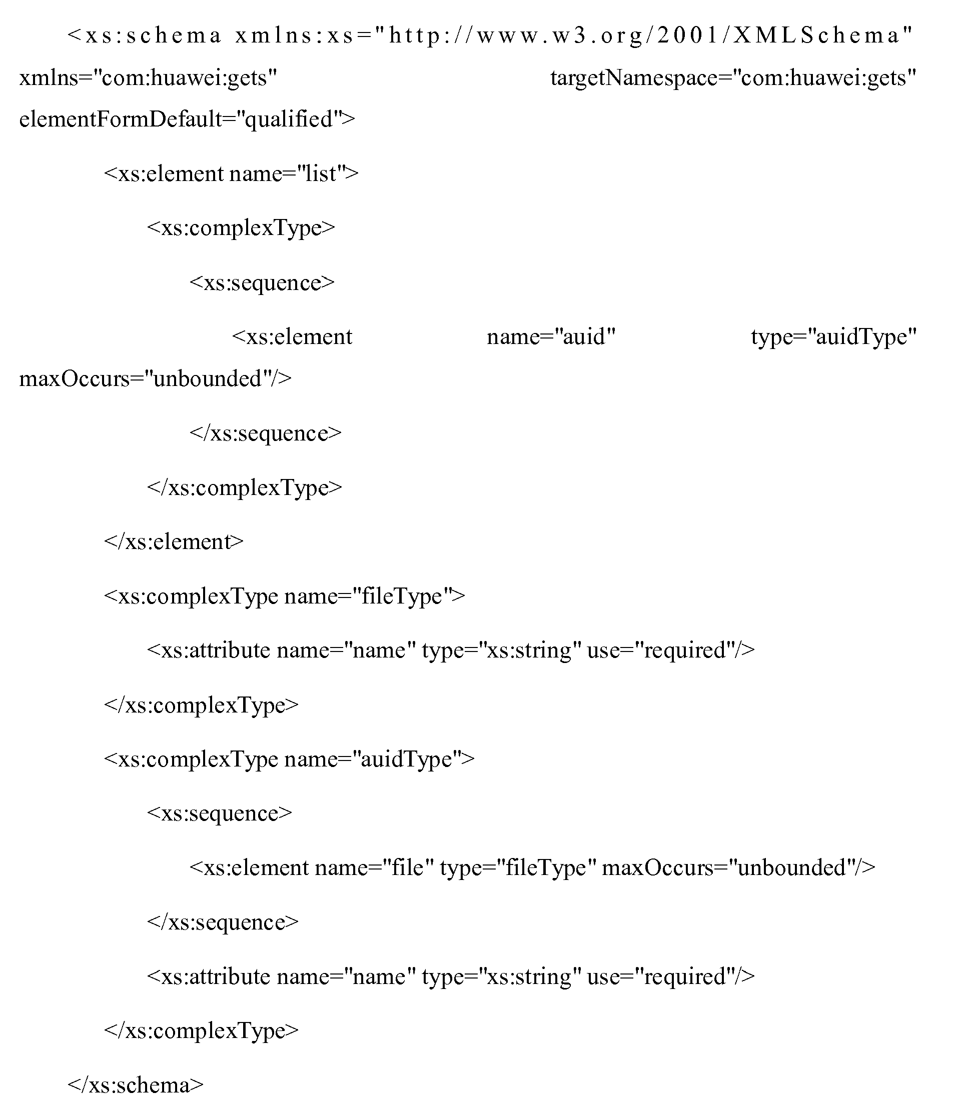

### Description:

The GETS request message body is defined based on the batch processing characteristics of the GETS request message, and supplements the OMA XCAP.

"com:huawei:gets" is namespace of the GETS request message body, which may also be other agreed values.

The GETS request message body is divided into three levels: list, auid, and file, and may be used to describe an operation of concurrently getting a plurality of documents of a plurality of services. Here, "list" is a root node, "auid" indicates a service to be processed, and "file" indicates a document to be processed.

In auidType, name is a name of auid.

In fileType, name is a name of a document, and may also be a wildcard such as "*" for getting all documents.

### For auid, when a specific document name is specified and the document name is specified as "*", all documents under the user auid are gotten.

An example of the batch GETS request message is as follows: GETS request message
G E T S http://xcap.example.com/00/users/sip:13500012345@huawei.com/batch HTTP/1.1

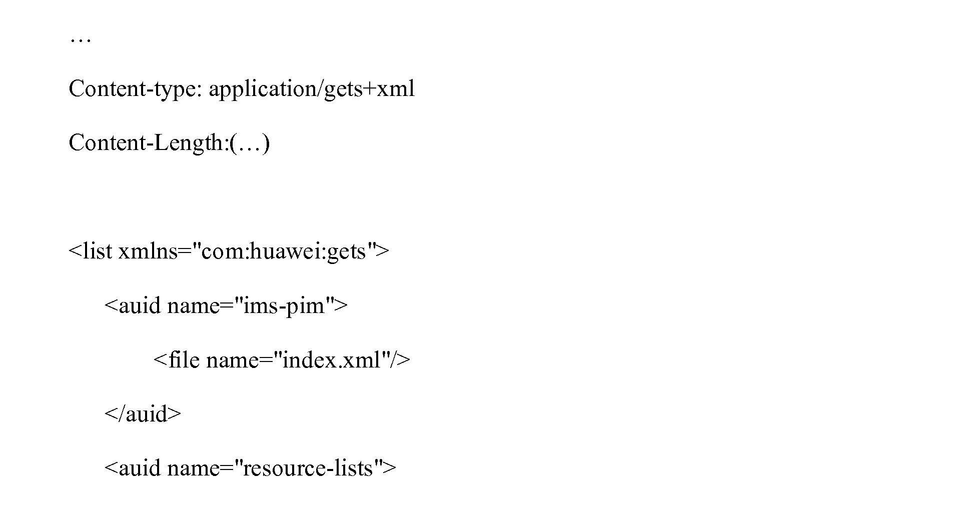

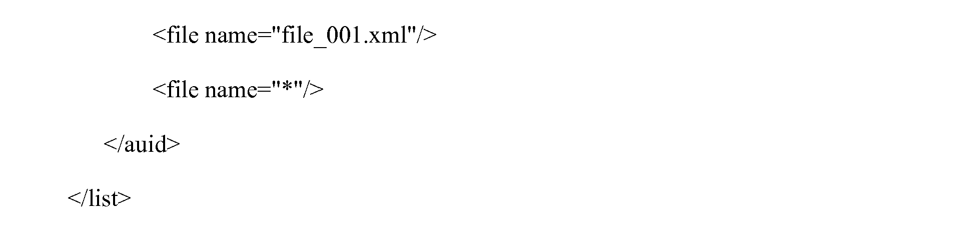

### The above example indicates that a user 13500012345 requests getting a document index.xml under ims-pim and all documents under resource-lists.

In step s502, the batch GETS request is decoded according to a GETS request message format to acquire batch GETS information.

The XDMS resolves the message header of the batch GETS request to obtain that Content-Type is application/gets+xml, and then decodes the message body of the batch GETS request according to the corresponding GETS message body format to acquire the batch GETS information.

In step s503, a batch GETS operation is performed according to the batch GETS information, so as to complete a batch GETS operation on the corresponding document information.

In step s504, a result of the batch GETS operation is encoded according to a GETS response message format.

The composition of a GETS response message is as follows:
1. Response Status Line
   Format: HTTP-Version + Status-Code + Reason-Phrase
   HTTP version, HTTP-Version: HTTP/1.1
   Status Code, Status-Code: 200 or 500
   Reason-Phrase: OK if Status-Code is 200, NOK if Status-Code is 500.
2. Response Message Header
   Content-Type: application/gets-result+xml
   Content-Length: (...)
   application/gets-result+xml is a GETS response message body format. The Content-Type may also be other tags, but must be distinguished from those defined by the OMA.
3. Response Message Body
   GETS response message body format:

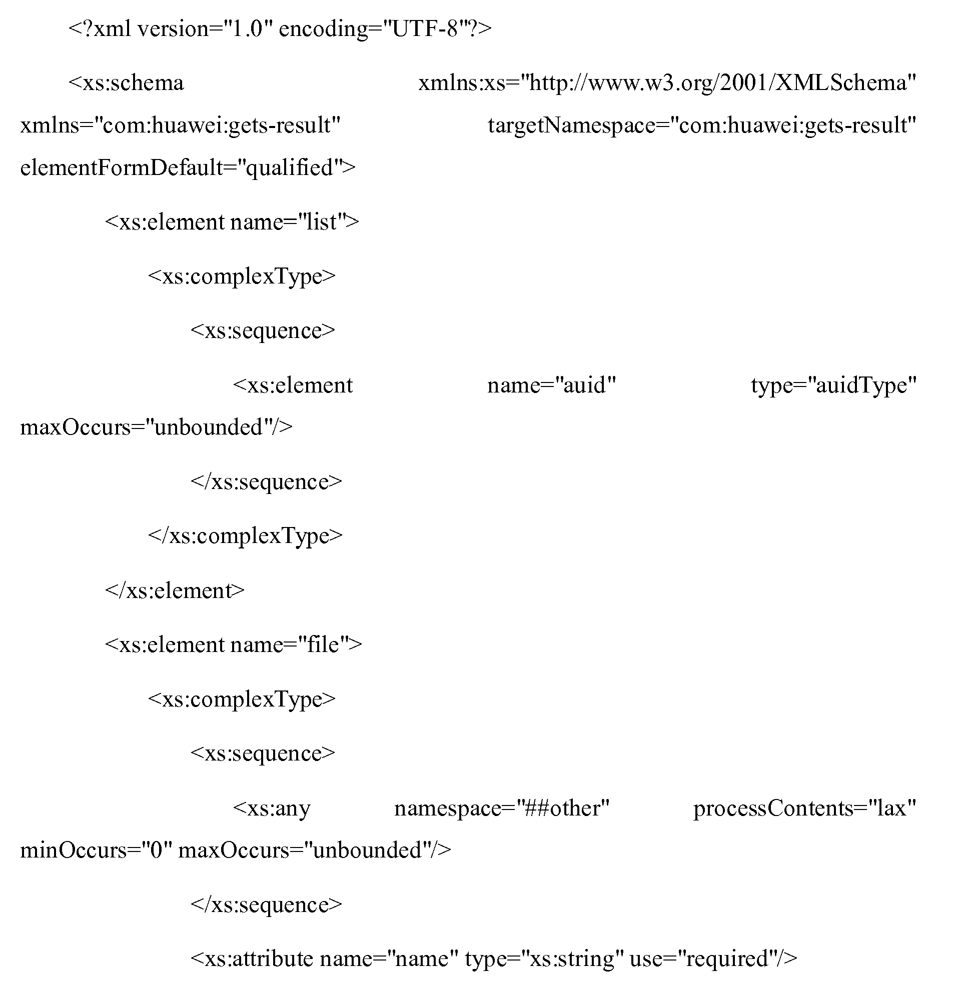

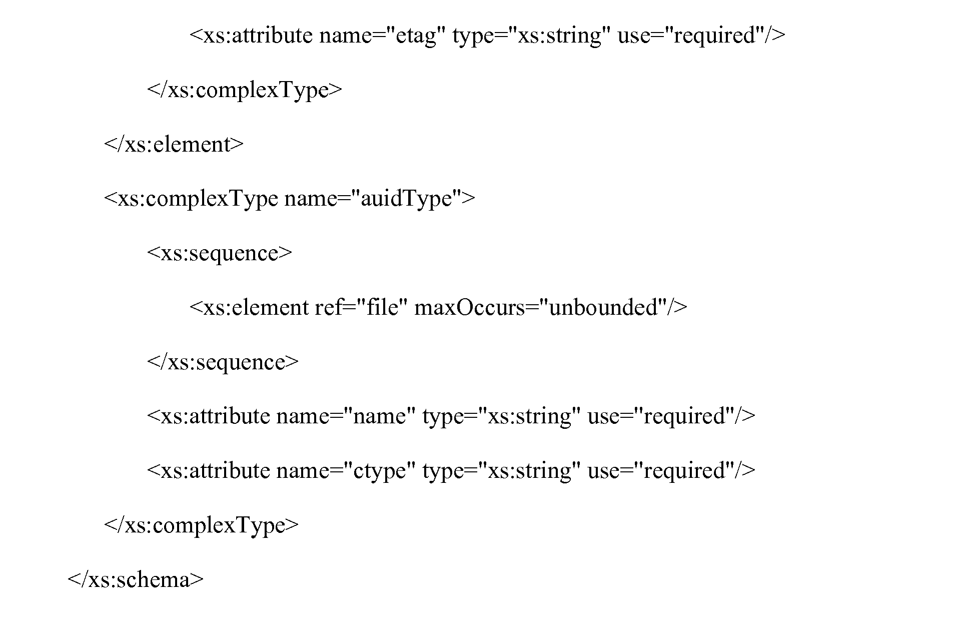

### Description:

The GETS response message body is defined based on the batch processing characteristics of the GETS response message, and supplements the OMA XCAP.

"com:huawei:gets-result" is NameSpace of the GETS response message body, which may also be other agreed values.

The GETS response message body is divided into three levels: list, auid, and file. Here, list is a root node, auid describes a service, and file describes a document. Other agreed names may also be used.
auid node: name is a name of auid, and ctype is schema corresponding to auid (that is, the message body format).

file node: name is a name of a document, and etag is a version number of the document.

An example of the batch GETS response message is as follows:

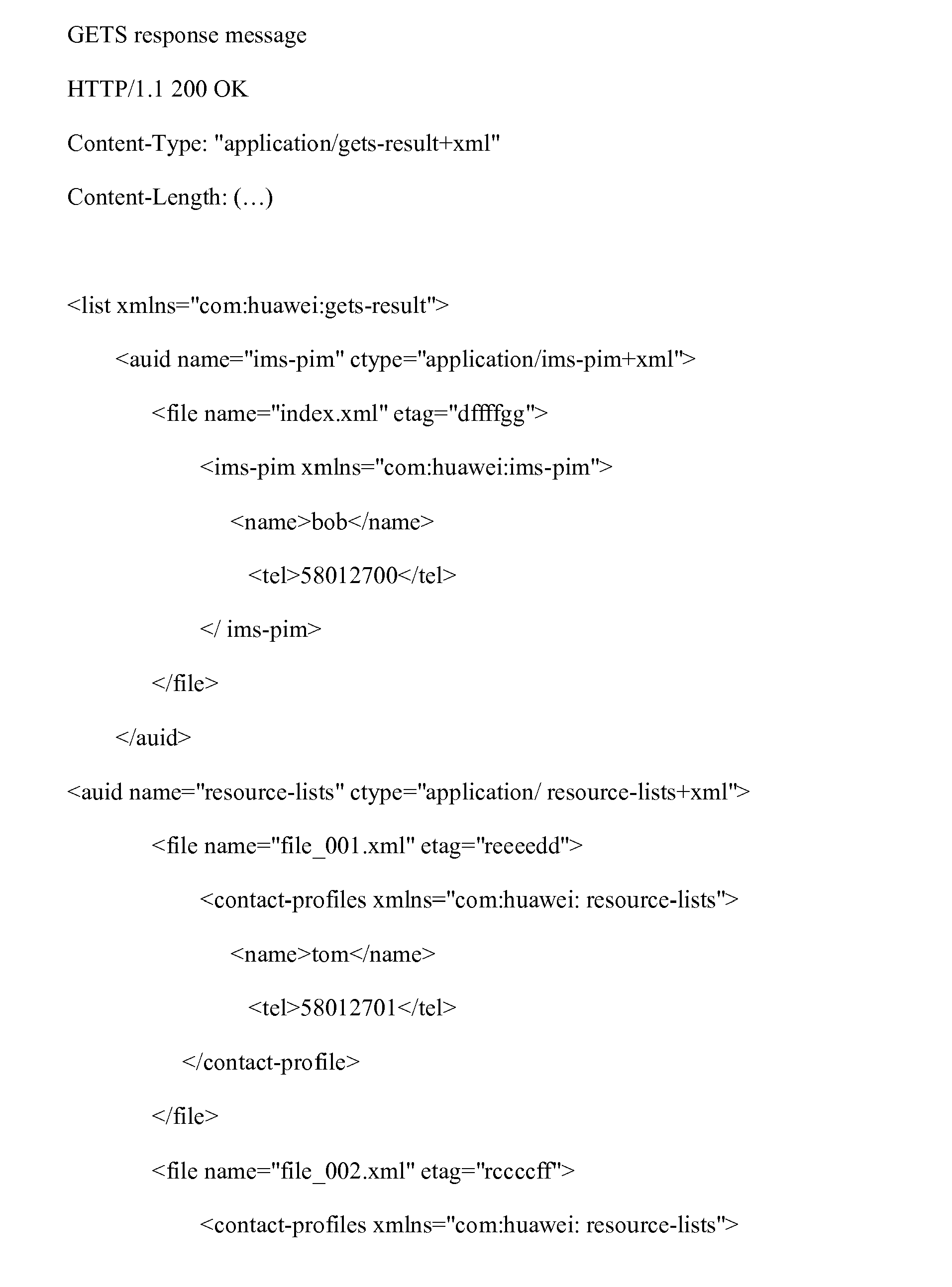

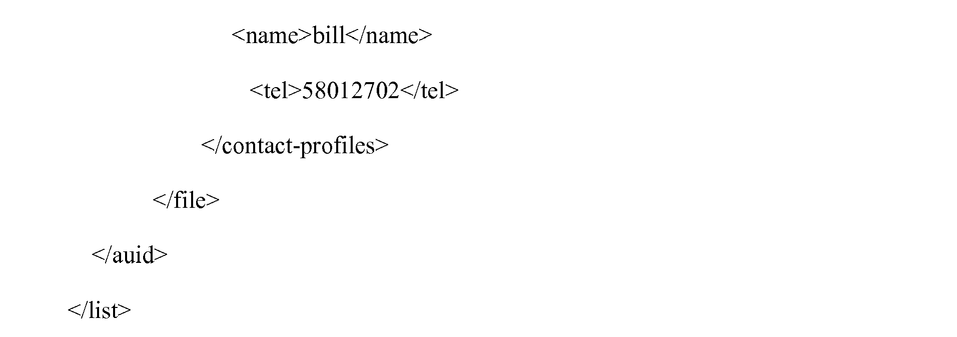

In this example, a document index.xml in "ims-pim" and only two documents in "resource-lists" are returned.

In step s505, a response message is returned to the XDMC.

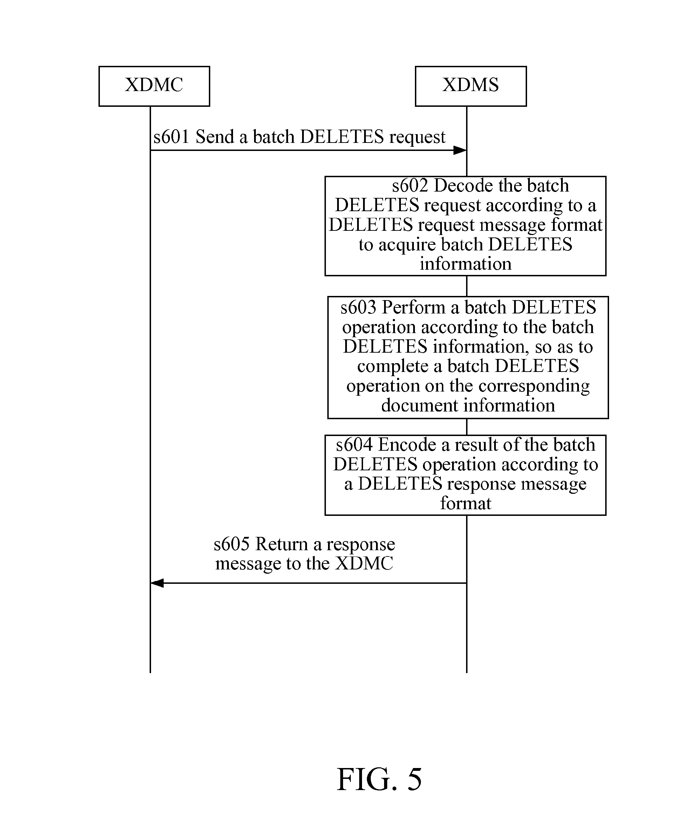

FIG. 5 is a schematic flow chart of an XML document management batch DELETES method according to an embodiment of the present invention, which is described in detail below.

In step s601, a batch DELETES request is sent.

A signaling format of the document management batch DELETES request is as follows:

### 1. Request Line

| Name | Type | Description |
|---|---|---|
| Method | token | XCAP request method, value: DELETES |
| Request-URI | HTTP URI | Specify an XCAP resource for the request operation. |
| HTTP-Version | | HTTP version, value: HTTP/1.1 |

The DELETES signaling request line is as follows:
DELETES http://xcap.example.com/00/users/sip:XXX@huawei.com/batch HTTP/1.1.
   Here, "batch" indicates a batch DELETES operation performed on documents or nodes; "00" is a replacement character for auid, indicating a specific service to be processed defined in the message; "XXX" indicates a user number that initiates the request; "sip:" indicates a sip uri; and "@huawei.com" is an XDMS home domain name of the user XXX.

### 2. Request Message Header

The DELETES signaling request message header is as follows:
Content-Type: application/deletes+xml;
Content-Length: (...)
   application/deletes+xml is a DELETES request message body format. The Content-Type may also be other tags, but must be distinguished from those defined by the OMA.

### 3. Request Message Body

DELETES request message body format:

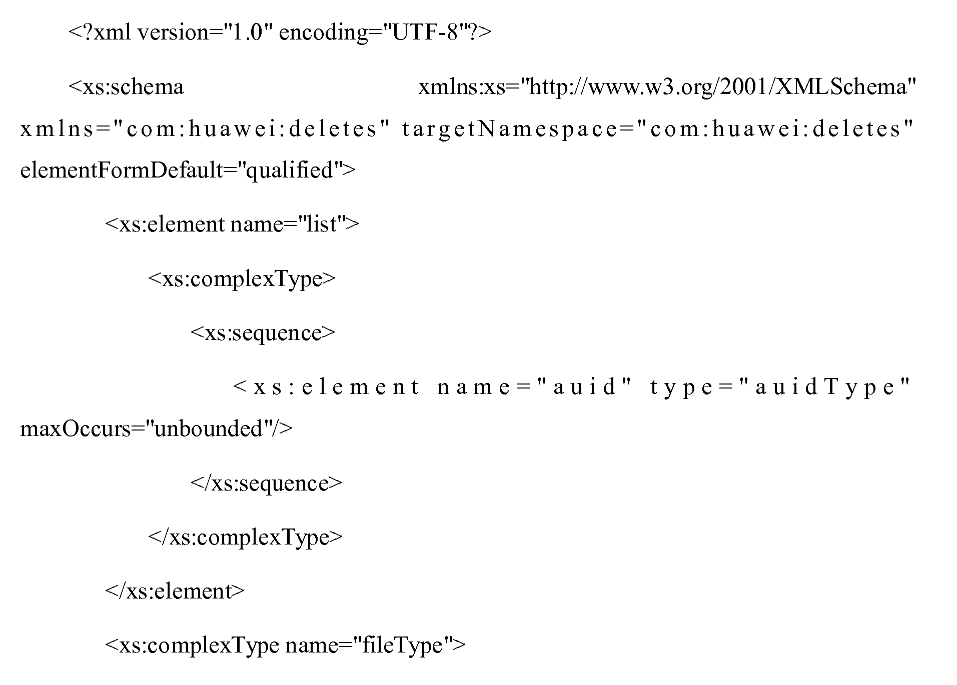

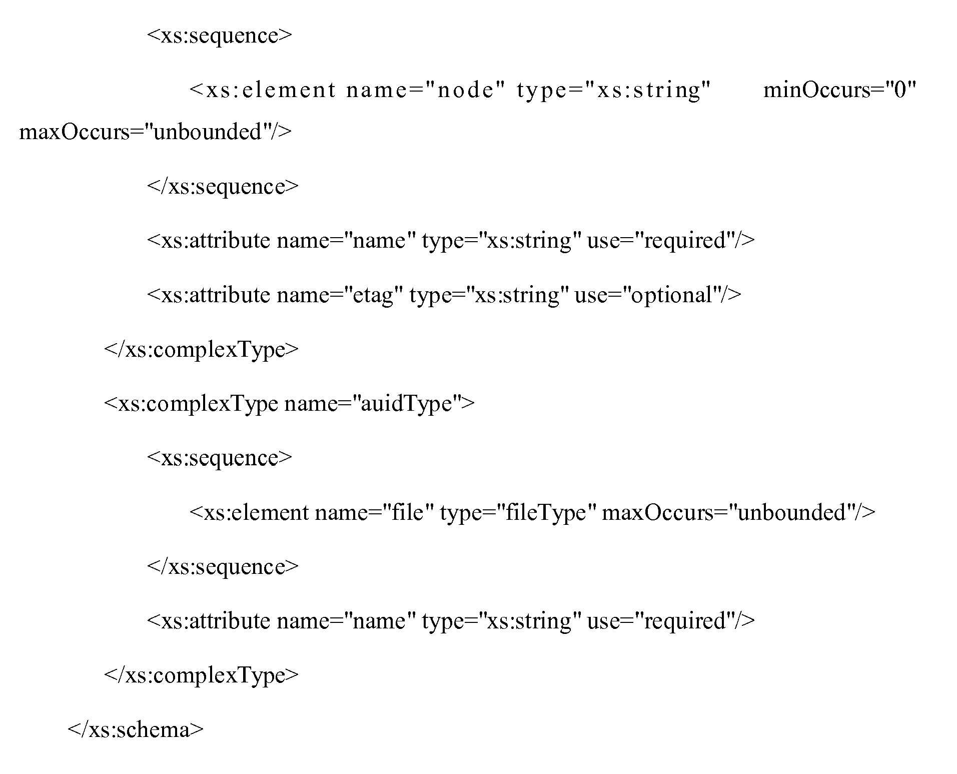

### Description:

The DELETES request message body is defined based on the batch processing characteristics of the DELETES request message.

"com:huawei:deletes" is NameSpace of the DELETES request message, which may also be other agreed values.

The DELETES request message body is divided into four levels: list, auid, file, and node. Here, "list" is a root node, auid is a service ID, "file" indicates a document to be deleted, and "node" indicates a node to be deleted.

According to the schema definition, documents of a plurality of services, a plurality of or all documents of a service (for example, a wildcard "*" is used as a document name), or a plurality of nodes of a document may be deleted at the same time.
auidType: name is a name of auid.

fileType: name is a name of a document, and etag is a version number of the document.
node: XPATH of a node.

An example of the batch DELETES request message is as follows:
DELETES request message
   DELETES http://xcap.example.com/00/users/sip:13500012345@huawei.com/batch HTTP/1.1

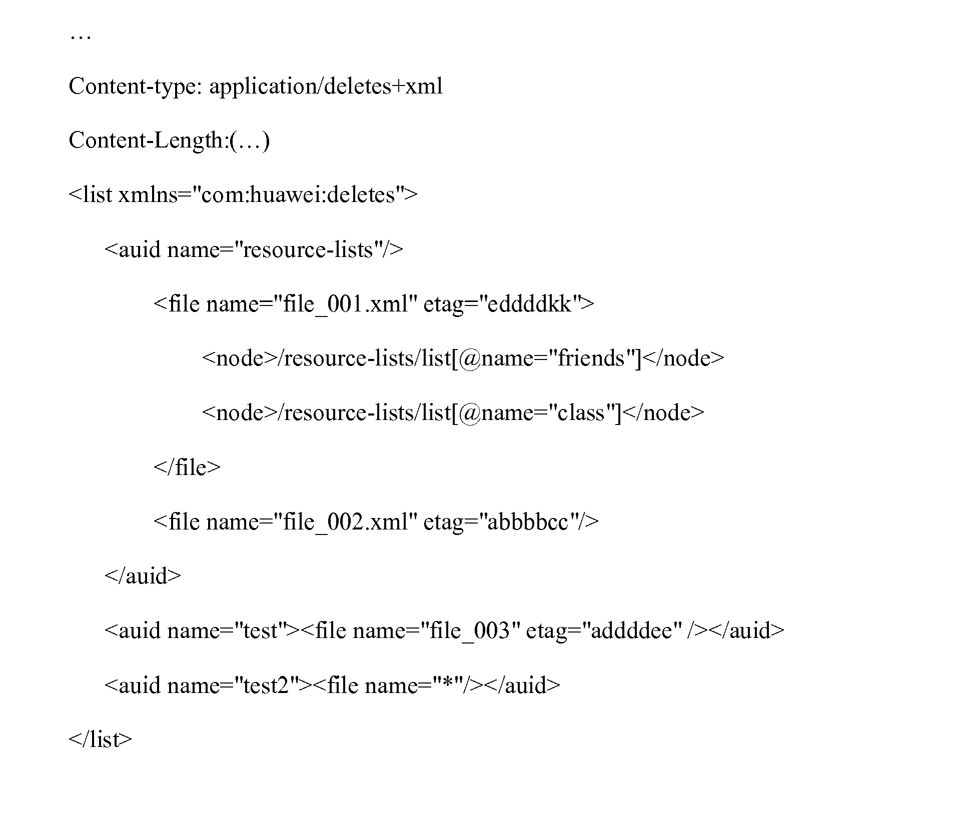

### Description:

This example indicates that a user 13500012345 requests performing a batch DELETES operation on documents.

In resource-lists, a document file_002.xml and two nodes of a document file_001.xml are deleted, XPATH of the nodes are respectively /resource-lists/list[@name="friends"] and /resource-lists/list[@name="class"].

In test, a document file_003 is deleted.

In test2, all documents are deleted.

In step s602, the batch DELETES request is decoded according to a DELETES request message format to acquire batch DELETES information.

The XDMS resolves the message header of the batch DELETES request to obtain that Content-Type is application/deletes+xml, and then decodes the message body of the batch DELETES request according to the corresponding DELETES message body format to acquire the batch DELETES information.

In step s603, a batch DELETES operation is performed according to the batch DELETES information, so as to complete a batch DELETES operation on the corresponding document information.

In step s604, a result of the batch DELETES operation is encoded according to a DELETES response message format.

The composition of a DELETES response message is as follows:
1. Response Status Line
   Format: HTTP-Version + Status-Code + Reason-Phrase
   HTTP version, HTTP-Version: HTTP/1.1
   Status Code, Status-Code: 200 or 500
   Reason-Phrase: OK if Status-Code is 200, NOK if Status-Code is 500.
2. Response Message Header Etag: "reeeedd"
   ...
   Content-Length: (...)

The DELETES response message has no message body, so the Content-Type does not need to be defined.

An example of the DELETES response message is as follows:
DELETES response message
HTTP/1.1 200 OK
Etag: "reeeedd"
   ...
   Content-Length: 0

The "response message" indicates that the batch DELETES operation is successfully completed, and a new version number of the document where nodes are deleted is reeeedd.

In step s605, a response message is returned to the XDMC.

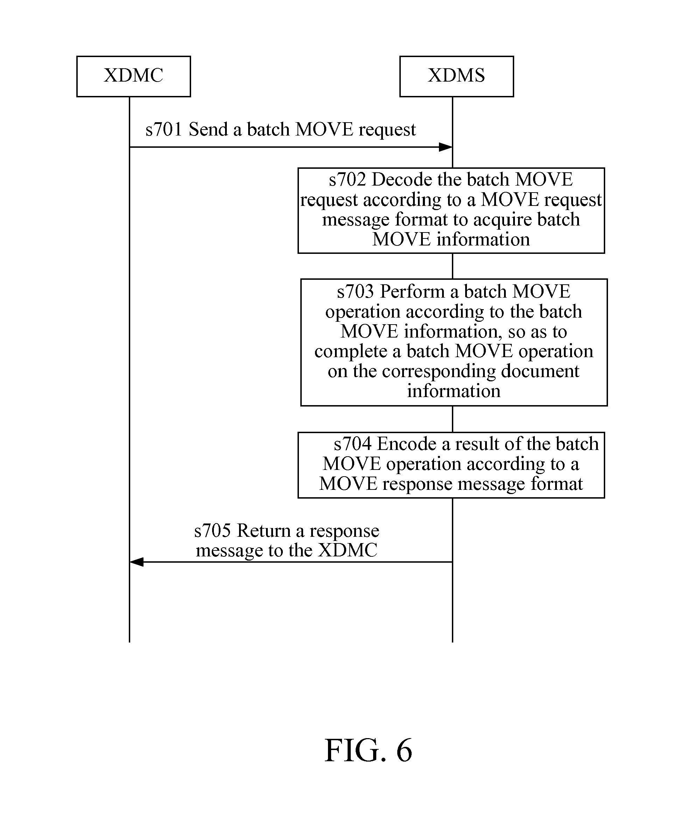

FIG. 6 is a schematic flow chart of an XML document management batch MOVE method according to an embodiment of the present invention, which is described in detail below.

In step s701, a batch MOVE request is sent.

A signaling format of the document management batch MOVE request is as follows:

### 1. Request Line

| Name | Type | Description |
|---|---|---|
| Method | token | XCAP request method, value: MOVE |
| Request-URI | HTTP URI | Specify an XCAP resource for the request operation. |
| HTTP-Version | | HTTP version, value: HTTP/1.1 |

The MOVE signaling request line is as follows:
MOVE
http://xcap.example.com/resource-lists/users/sip:XXX@huawei.com/batch HTTP/1.1.

Here, "batch" indicates a batch MOVE operation performed on nodes in a document; "resource-lists" indicates a specific service to be processed; "XXX" indicates a user number that initiates the request; "sip:" indicates a sip uri; and "@huawei.com" is an XDMS home domain name of the user XXX.

### 2. Request Message Header

The MOVE signaling request message header is as follows:
Content-Type: application/move+xml
Content-Length: (...)
application/move+xml is a MOVE request message body format. The Content-Type may also be other tags, but must be distinguished from those defined by the OMA.

### 3. Request Message Body

MOVE request message body format:

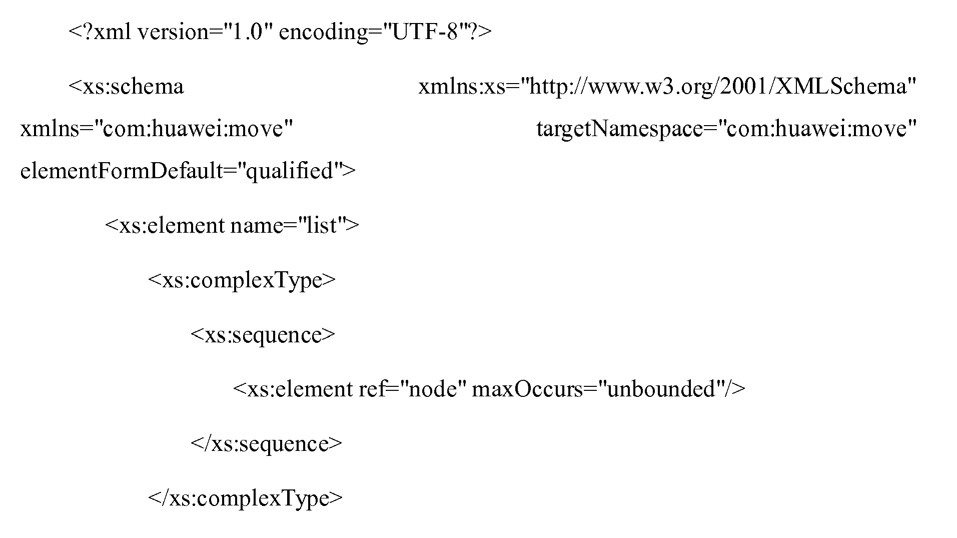

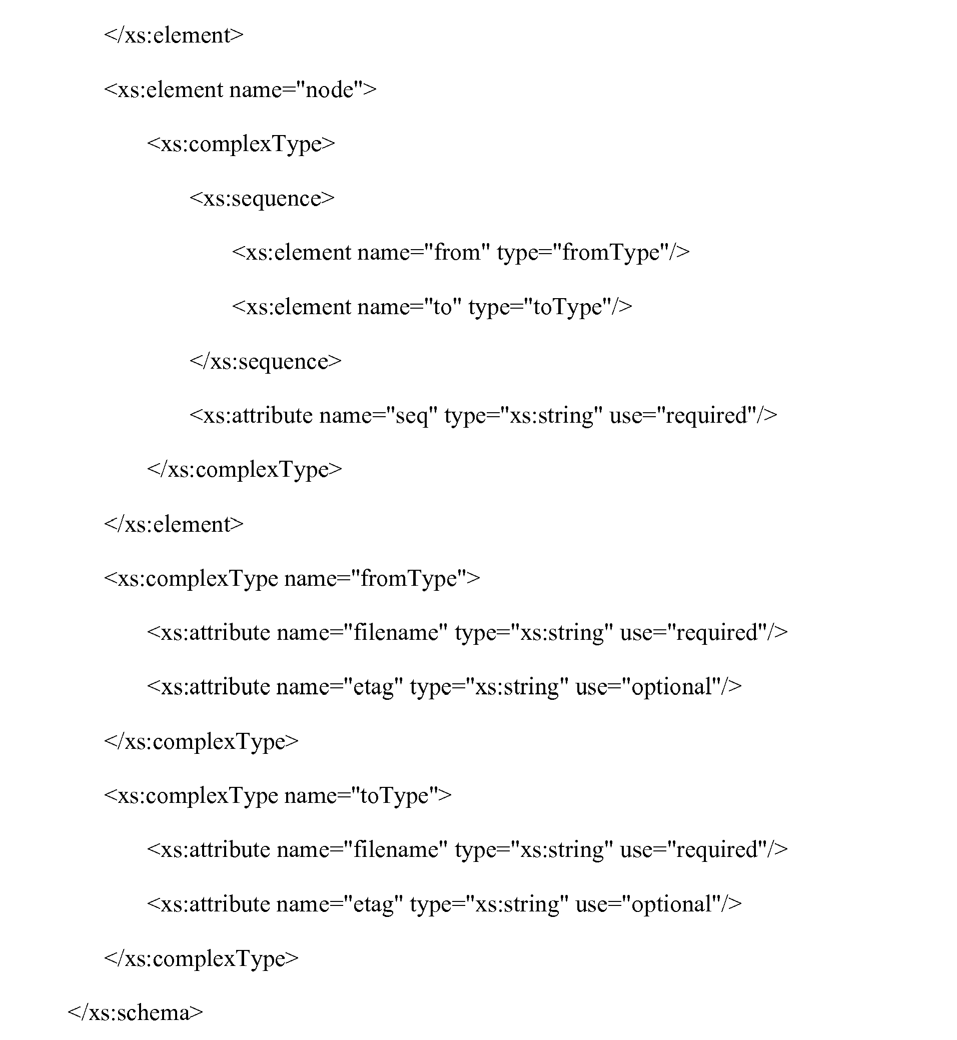

### Description:

The MOVE request message body is defined based on the batch processing characteristics of the MOVE request message, and supplements the OMA XCAP.

"com:huawei:MOVE" is NameSpace of the MOVE request message, which may also be other agreed values.

The MOVE request message body is constituted by list and 1-N node nodes. Each node contains a sequence number (seq), a source path (in the "from" tag, conforming to XPATH syntax), a destination path (in the "to" tag, conforming to XPATH syntax). Other agreed names may also be used.

from: filename is a name of a source document, and etag is a version number of the source document.

to: filename is a name of a destination document, and etag is a version number of the destination document.

The MOVE signaling may be adapted to move nodes among different documents, and may also be adapted to move nodes in the same document.

An example of the batch MOVE request message is as follows:
MOVE request message
MOVE
   http://xcap.example.com/resource-lists/users/sip:3500012345@huawei.com/batch HTTP/1.1

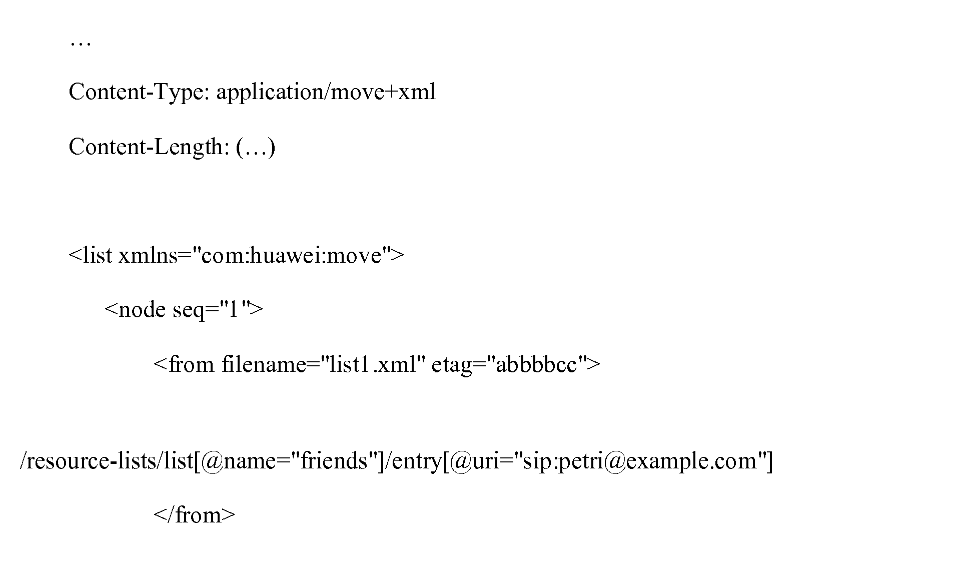

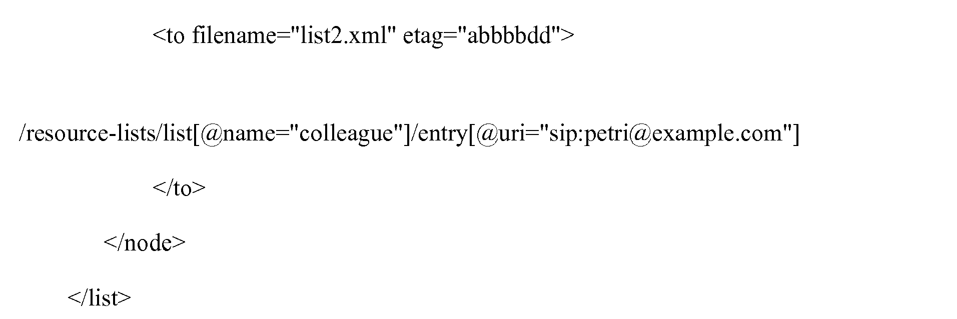

This example indicates that a user 13500012345 requests performing a MOVE operation among documents of a "resource-lists" service to move nodes under a group "friends" in a document listl.xml (uri="sip:petri@example.com") to a group "colleague" in a document list2.xml.

In step s702, the batch MOVE request is decoded according to a MOVE request message format to acquire batch MOVE information.

The XDMS resolves the message header of the batch MOVE request to obtain that Content-Type is application/move+xml, and then decodes the message body of the batch MOVE request according to the corresponding MOVE message body format to acquire the batch MOVE information.

In step s703, a batch MOVE operation is performed according to the batch MOVE information, so as to complete a batch MOVE operation on the corresponding document information.

In step s704, a result of the batch MOVE operation is encoded according to a MOVE response message format.

The composition of a MOVE response message is as follows:
1. Response Status Line
   Format: HTTP-Version + Status-Code + Reason-Phrase
   HTTP version, HTTP-Version: HTTP/1.1
   Status Code, Status-Code: 200 or 500
   Reason-Phrase: OK if Status-Code is 200, NOK if Status-Code is 500.
2. Response Message Header
   Etag: "reeeedd"
   Content-Length: (...)

The MOVE response message has no message body, so the Content-Type does not need to be defined.

An example of the MOVE response message is as follows:
MOVE response message
HTTP/1.1 200 OK Etag: "reeeedd"
Content-Length: 0

In step s705, a response message is returned to the XDMC.

The XML document management system, the XDMC, and the XDMS corresponding to the above method embodiments are illustrated in detail below.

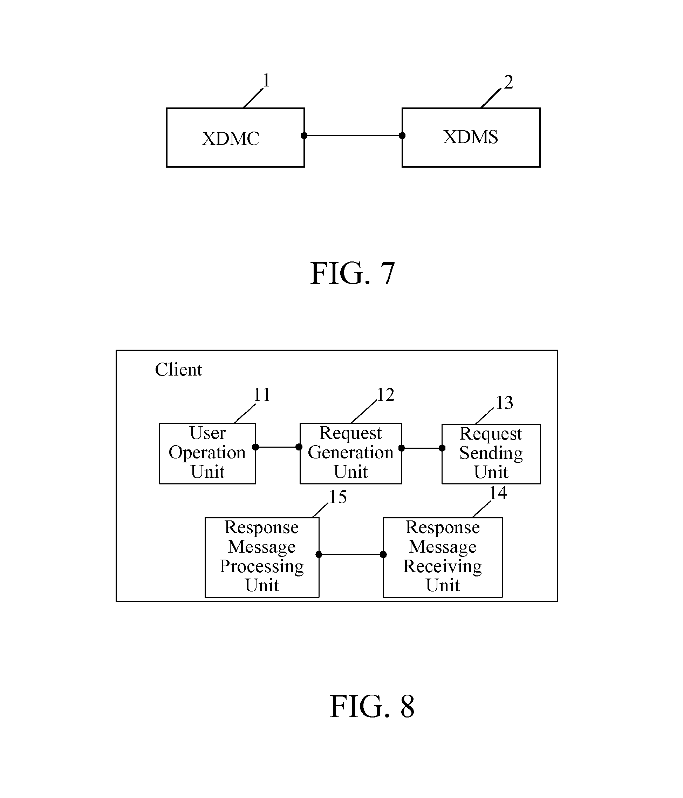

FIG. 7 is a schematic view showing the constitution of an XML document management system according to an embodiment of the present invention. The XML document management system can implement the XML document management request method and the XML document management method according to the above method embodiments, and mainly includes an XDMC 1 and an XDMS 2.

The XDMC 1 is adapted to generate a request of processing for batch document management according to a request of processing for batch document management request indication of processing for batch document management input by a user, and send the request of processing for batch document management to the XDMS 2; receive a document management batch processing response message from the XDMS 2, read a status code carried in the batch processing response message, and identify whether a message body exists or not according to a message header of the batch processing response message, and decode the message body according to a corresponding batch processing response message body format to acquire document management batch processing result information if the message body exists.

The XDMS 2 is adapted to receive a document management request, determine whether the document management request is a request of processing for batch document management or not, acquire corresponding document management batch processing information from the request of processing for batch document management if the document management request is a request of processing for batch document management, and perform a corresponding document management batch processing operation according to the document management batch processing information; generate a document management batch processing response message based on execution result information of the document management batch processing operation and according to a corresponding response message format for the document management batch processing operation, and send the document management batch processing response message to the XDMC 1.

FIG. 8 is a schematic structural view of an XDMC according to an embodiment of the present invention. The XDMC is adapted to implement the XML document management request method according to the above method embodiments, and mainly includes a user operation unit 11, a request generation unit 12, a request sending unit 13, a response message receiving unit 14, and a response message processing unit 15.

The user operation unit 11 is adapted to receive a request of processing for batch document management request indication of processing for batch document management of a user.

The request generation unit 12 is adapted to generate a request of processing for batch document management according to the request of processing for batch document management request indication of processing for batch document management.

The request sending unit 13 is adapted to send the request of processing for batch document management to a server.

The response message receiving unit 14 is adapted to receive a batch processing response message from the server.

The response message processing unit 15 is adapted to read a status code carried in the batch processing response message, and identify whether a message body exists or not according to a message header of the batch processing response message, and decode the message body according to a corresponding batch processing response message body format to acquire document management batch processing result information if the message body exists.

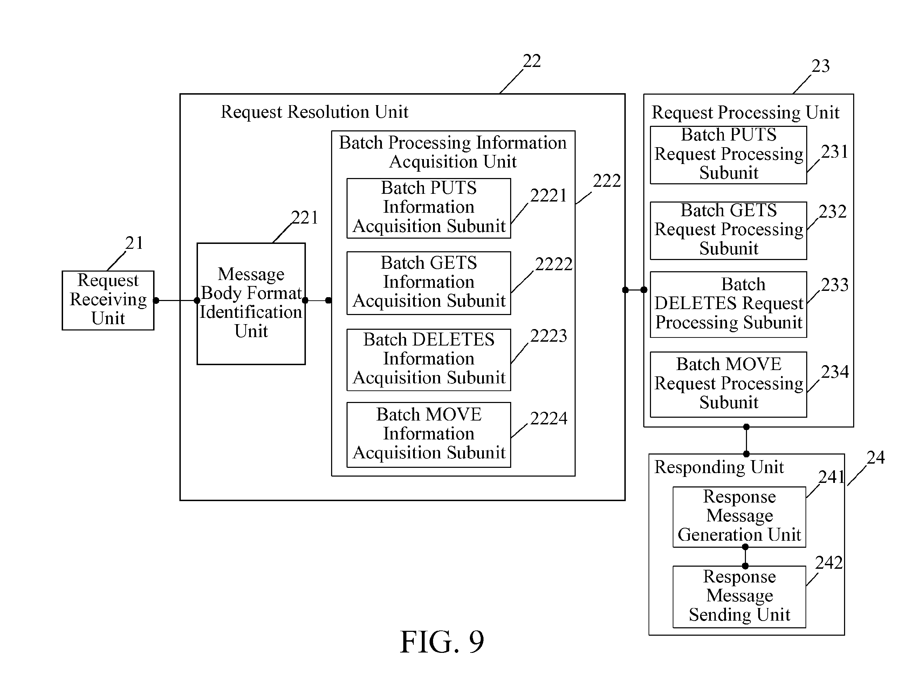

FIG. 9 is a schematic structural view of an XDMS according to an embodiment of the present invention. The XDMS is mainly adapted to implement the XML document management method according to the above method embodiments, and mainly includes a request receiving unit 21, a request resolution unit 22, a request processing unit 23, and a responding unit 24.

The request receiving unit 21 is adapted to receive a document management request.

The request resolution unit 22 is adapted to determine whether the document management request is a request of processing for batch document management or not, and acquire corresponding document management batch processing information from the request of processing for batch document management if the document management request is a request of processing for batch document management. The request resolution unit 22 may further include a message body format identification unit 221 and a batch processing information acquisition unit 222.

The message body format identification unit 221 is adapted to resolve a message header of the request of processing for batch document management to identify a message body format of the request of processing for batch document management.

The batch processing information acquisition unit 222 is adapted to decode a message body of the request of processing for batch document management according to the message body format to acquire corresponding document management batch processing information. The batch processing information acquisition unit 222 may further include a batch PUTS information acquisition subunit 2221, a batch GETS information acquisition subunit 2222, a batch DELETES information acquisition subunit 2223, and a batch MOVE information acquisition subunit 2224.

The batch PUTS information acquisition subunit 2221 is adapted to decode a message body of the document management request according to a document management batch PUTS request message body format to acquire corresponding document management batch PUTS information when the message body format identified by the message body format identification unit is the document management batch PUTS request message body format.

The batch GETS information acquisition subunit 2222 is adapted to decode a message body of the document management request according to a document management batch GETS request message body format to acquire corresponding document management batch GETS information when the message body format identified by the message body format identification unit is the document management batch GETS request message body format.

The batch DELETES information acquisition subunit 2223 is adapted to decode a message body of the document management request according to a document management batch DELETES request message body format to acquire corresponding document management batch DELETES information when the message body format identified by the message body format identification unit is the document management batch DELETES request message body format.

The batch MOVE information acquisition subunit 2224 is adapted to decode a message body of the document management request according to a document management batch MOVE request message body format to acquire corresponding document management batch MOVE information when the message body format identified by the message body format identification unit is the document management batch MOVE request message body format.

The request processing unit 23 is adapted to perform a corresponding document management batch processing operation according to the document management batch processing information. The request processing unit 23 may further include a batch PUTS request processing subunit 231, a batch GETS request processing subunit 232, a batch DELETES request processing subunit 233, and a batch MOVE request processing subunit 234.

The batch PUTS request processing subunit 231 is adapted to perform a document management batch PUTS operation according to the document management batch PUTS information.

The batch GETS request processing subunit 232 is adapted to perform a document management batch GETS operation according to the document management batch GETS information.

The batch DELETES request processing subunit 233 is adapted to perform a document management batch DELETES operation according to the document management batch DELETES information.

The batch MOVE request processing subunit 234 is adapted to perform a document management batch MOVE operation according to the document management batch MOVE information.

The responding unit 24 is adapted to generate a document management batch processing response message based on execution result information of the document management batch processing operation and according to a corresponding response message format for the document management batch processing operation, and send the document management batch processing response message to an XDMC. The responding unit 24 may further include a response message generation unit 241 and a response message sending unit 242.

The response message generation unit 241 is adapted to generate a document management batch processing response message based on execution result information of the document management batch processing operation and according to a corresponding response message format for the document management batch processing operation.

The response message sending unit 242 is adapted to send the document management batch processing response message to an XDMC.

It can be seen from the above embodiments that in the present invention, the client sends an indication for performing a batch processing operation on a plurality of documents or a plurality of nodes in a document to the server through a document management request, and the server acquires corresponding document management batch processing information after determining that the document management request is a request of processing for batch document management and then performs a corresponding document management batch processing operation. As the client can trigger a batch processing operation on a plurality of documents or a plurality of nodes in a single document by sending only one signaling message, the operating delay is reduced, thereby improving the operational efficiency and the reliability of data operations.

Persons of ordinary skill in the art should understand that that all of or a part of processes in the method according to the embodiments may be implemented by a computer program instructing relevant hardware. The program may be stored in a computer readable storage medium. When the program is executed, the processes of the method according to the embodiments of the present invention are performed. The storage medium may be a magnetic disk, an optical disk, a read-only memory (ROM) or a random access memory (RAM).

The above descriptions are merely preferred embodiments of the present invention. It should be noted by persons of ordinary skill in the art that modifications and variations may be made without departing from the principle of the present invention, which should be construed as falling within the scope of the present invention.

## Claims

1. An XML document management request method, comprising:
receiving a request indication of processing for batch document management of a user;
generating a request of processing for batch document management according to request indication of processing for batch document management; and
sending the request of processing for batch document management to a server.

2. The method according to the claim 1, wherein the request of processing for batch document management is one of a request of PUTS for batch document management, a request of GETS for batch document management, a request of DELETES for batch document management, and a request indication of MOVE for batch document management.

3. An XML document management method, comprising:
receiving a document management request;
determining whether the received document management request is a request of processing for batch document management or not;
if the received document management request is a request of processing for batch document management, acquiring corresponding document management batch processing information from the request of processing for batch document management; and
performing a corresponding document management batch processing operation according to the document management batch processing information.

4. The method according to the claim 3, wherein the determining whether the received document management request is a request of processing for batch document management or not comprises:
according to the method name of the received document management request, determining the received document management request is a request of processing for batch document management.

5. The method according to the claim 3 or 4, wherein the acquiring corresponding document management batch processing information from the request of processing for batch document management comprises:
resolving the message header of the request of processing for batch document management to determine a message body format of the request of processing for batch document management, and
decoding the message body of the request of processing for batch document management according to the message body format, so as to acquire the corresponding document management batch processing information.

6. The method according to the claim 3, wherein after the performing a corresponding document management batch processing operation according to the document management batch processing information, the method further comprises:
based on execution result information of the document management batch processing operation, and according to a corresponding response message format for the document management batch processing operation, a document management batch processing response message is generated and is sent to the sender of the received document management request.

7. The method according to the claim 5, wherein the request of processing for batch document management is one of a request of PUTS for batch document management, a request of GETS for batch document management, a request of DELETES for batch document management, and a request indication of MOVE for batch document management.

8. An XML document management client, XDMC, comprising:
a user operation unit, adapted to receive a request indication of processing for batch document management of a user;
a request generation unit, adapted to generate a request of processing for batch document management according to the request indication of processing for batch document management; and
a request sending unit, adapted to send the request of processing for batch document management to a server.

9. The XDMC according to the claim 8, further comprising:
a response message receiving unit is adapted to receive a batch processing response message from the server; and
a response message processing unit is adapted to read a status code carried in the batch processing response message, and identify whether a message body exists or not according to a message header of the batch processing response message, and decode the message body according to a corresponding batch processing response message body format to acquire document management batch processing result information if the message body exists.

10. An XML document management server, XDMS, comprising:
a request receiving unit, adapted to receive a document management request;
a request resolution unit, adapted to determine whether the document management request is a request of processing for batch document management or not, and to acquire corresponding document management batch processing information from the request of processing for batch document management if the document management request is a request of processing for batch document management; and
a request processing unit, adapted to perform a corresponding document management batch processing operation according to the document management batch processing information.

11. The XDMS according to the claim 10, wherein the request resolution unit (22) further includes a message body format identification unit (221) and a batch processing information acquisition unit (222);
the message body format identification unit (221) is adapted to resolve a message header of the request of processing for batch document management to identify a message body format of the request of processing for batch document management; and
the batch processing information acquisition unit (222) is adapted to decode a message body of the request of processing for batch document management according to the message body format to acquire corresponding document management batch processing information.

12. The XDMS according to the claim 11, wherein the batch processing information acquisition unit (222) further comprises:
a batch PUTS information acquisition subunit (2221), adapted to decode a message body of the document management request according to a document management batch PUTS request message body format to acquire corresponding document management batch PUTS information when the message body format identified by the message body format identification unit is the document management batch PUTS request message body format;
a batch GETS information acquisition subunit (2222), adapted to decode a message body of the document management request according to a document management batch GETS request message body format to acquire corresponding document management batch GETS information when the message body format identified by the message body format identification unit is the document management batch GETS request message body format;
a batch DELETES information acquisition subunit (2223), adapted to decode a message body of the document management request according to a document management batch DELETES request message body format to acquire corresponding document management batch DELETES information when the message body format identified by the message body format identification unit is the document management batch DELETES request message body format; and
a batch MOVE information acquisition subunit (2224), adapted to decode a message body of the document management request according to a document management batch MOVE request message body format to acquire corresponding document management batch MOVE information when the message body format identified by the message body format identification unit is the document management batch MOVE request message body format.

13. The XDMS according to the claim 12, wherein the request processing unit comprises:
a batch PUTS request processing subunit (231), adapted to perform a document management batch PUTS operation according to the document management batch PUTS information;
a batch GETS request processing subunit (232), adapted to perform a document management batch GETS operation according to the document management batch GETS information;
a batch DELETES request processing subunit (233), adapted to perform a document management batch DELETES operation according to the document management batch DELETES information; and
a batch MOVE request processing subunit (234), adapted to perform a document management batch MOVE operation according to the document management batch MOVE information.

14. The XDMS according to any one of claims 10 to 13, further comprising:
a responding unit (24), adapted to generate a document management batch processing response message based on execution result information of the document management batch processing operation and according to a corresponding response message format for the document management batch processing operation, and send the document management batch processing response message to an XDMC.

15. The XDMS according to claim 14, wherein the responding unit (24) further comprises:
the response message generation unit (241), adapted to generate a document management batch processing response message based on execution result information of the document management batch processing operation and according to a corresponding response message format for the document management batch processing operation.
the response message sending unit (242), adapted to send the document management batch processing response message to an XDMC.

16. An XML document management system, comprising: a client and a server,
wherein
the client comprises:
a user operation unit, adapted to receive a request indication of processing for batch document management of a user;
a request generation unit, adapted to generate a request of processing for batch document management according to the request indication of processing for batch document management; and
a request sending unit, adapted to send the request of processing for batch document management to the server;
the server includes:
a request receiving unit, adapted to receive a document management request;
a request resolution unit, adapted to determine whether the document management request is a request of processing for batch document management or not, and acquire corresponding document management batch processing information from the request of processing for batch document management if the document management request is a request of processing for batch document management; and
a request processing unit, adapted to perform a corresponding document management batch processing operation according to the document management batch processing information.

17. The system according to the claim 16, wherein the server further comprises:
a responding unit 24, adapted to generate a document management batch processing response message based on execution result information of the document management batch processing operation and according to a corresponding response message format for the document management batch processing operation, and send the document management batch processing response message to an XDMC.

18. The system according to the claim 16 or 17, wherein the client further comprises:
a response message receiving unit, adapted to receive a batch processing response message from the server.
a response message processing unit, adapted to read a status code carried in the batch processing response message, and identify whether a message body exists or not according to a message header of the batch processing response message, and decode the message body according to a corresponding batch processing response message body format to acquire document management batch processing result information if the message body exists.
